# EUROPÄISCHE PATENTANMELDUNG

(11) **EP 2 040 049 A1**
(43) Veröffentlichungstag der Anmeldung: **25.03.2009**
(21) Anmeldenummer: 08157612.6
(22) Anmeldetag: 04.06.2008
(51) Int. Cl.: G01G 19/00

(54) **Briefwaage mit Beruhigungsstrecke**

(30) Priorität: 18.09.2007 DE 102007044746
(71) Anmelder: Böwe Bell + Howell GmbH, 61191 Rosbach v.d.H (DE)
(72) Erfinder: Hahn, Wilfried, 64285 Darmstadt (DE)
(74) Vertreter: Braun-Dullaeus, Karl-Ulrich

(57) **Zusammenfassung**

Vorrichtung zum Wiegen von Postsendungen, insbesondere von Briefsendungen, die auf einer Transportstrecke in einem Sendungsstrom transportiert werden, wobei in der Transportstrecke eine Wiegeeinrichtung mit einer Zufuhrstrecke, einer mit einer Waage ausgestatteten Wiegestrecke und eine Abfuhrstrecke vorgesehen ist, wobei die Wiegestrecke von der Zufuhrstrecke und der Abfuhrstrecke mechanisch entkoppelt ist, wobei angetriebene Führungsriemen vorgesehen sind, zwischen denen die Postsendungen geklemmt transportiert werden, wobei die Wiegestrecke separate im Bezugssystem der Waage befindliche Führungsriemen aufweist wobei unmittelbar vor und/oder hinter der Wiegestrecke eine Beruhigungszone vorgesehen ist, in der die Postsendung ohne seitliche Klemmung geführt wird.

## Beschreibung

Die Erfindung betrifft eine Vorrichtung zum Wiegen von Postsendungen, insbesondere von flachen Briefsendungen, die auf einer Transportstrecke in einem Sendungsstrom transportiert werden, wobei in der Transportstrecke eine Wiegeeinrichtung mit einer Zufuhrstrecke, einer mit einer Waage ausgestatteten Wiegestrecke und eine Abfuhrstrecke vorgesehen ist, wobei die Wiegestrecke von der Zufuhrstrecke und der Abfuhrstrecke mechanisch entkoppelt ist, wobei angetriebene Führungsriemen vorgesehen sind, zwischen denen die Postsendungen geklemmt transportiert werden, wobei die Wiegestrecke separate im Bezugssystem der Waage befindliche Führungsriemen aufweist.

In Vorrichtungen dieser Art werden Postsendungen und insbesondere flache Briefe verschiedener Formate und Postkarten in einem kontinuierlichen Sendungsstrom verarbeitet. Um das notwendige Porto oder um Entgelte für die Verarbeitung zu bestimmen, wird das Gewicht der einzelnen Postsendungen ermittelt, wobei die Postsendungen zu diesem Zwecke über eine Wiegeeinrichtung geführt werden. Dabei darf der Sendungsstrom nicht merklich verzögert oder gar gestoppt werden. Derzeit eingesetzte Anlagen können Wiegung bei hohen Sendungsströmen von bis zu 50.000 Postsendungen pro Stunde zuverlässig durchführen. Die bislang in den Wiegeeinrichtungen eingesetzten Waagen sind jedoch prinzipiell in ihrer Wiegefrequenz begrenzt, da sie erst ausschwingen müssen, bevor sie eine neue Postsendung präzise wiegen können. Zudem ist eine gewisse Baulänge der Waage notwendig, um den zu wiegenden Brief lange genug auf der Waage zu haben und eine genaue Messung durchführen zu können. Schließlich muss die Messung bei den bekannten Vorrichtungen fertig sein, bevor der Brief von den wegführenden Führungsriemen der Abfuhrstrecke erfasst wird und es zu einer Kopplung des Bezugssystems der Waage mit dem der Umgebung kommt.

Aufgabe der vorliegenden Erfindung ist es nunmehr, eine solche Vorrichtung mit technisch einfachen Mitteln im Hinblick auf die Präzision der Wiegungen trotz hoher Geschwindigkeit und Dichte des Sendungsstromes zu verbessern.

Diese Aufgabe wird durch die Vorrichtung mit dem kennzeichnenden Merkmal des Anspruchs 1 gelöst. Merkmale besonderer Ausführungsformen der Erfindungen sind in den Unteransprüchen genannt.

Der wesentliche Erfindungsgedanke liegt in dem Einsatz der Beruhigungszone, die unmittelbar an die Wiegestrecke angrenzt. In dieser Beruhigungszone ist die Postsendung nicht gefasst transportiert und kann sich vor oder nach der Wiegung, die an der geklemmt geführten Postsendung stattfindet, setzen. Erst mit dem Setzen der Postsendung kommt es zu einer Kopplung der Bezugssysteme. Diese Kopplung ist verhältnismäßig "weich" und lässt sich bei der rechnerischen Auswertung der Wiegung problemlos berücksichtigen. Im Gegensatz dazu bewirken die bislang bekannten Systemen, die den aus der Waage ausfahrenden Brief sofort wieder klemmend ergreifen, um eine permanente Fassung zu gewährleisten, eine plötzliche "harte" Kopplung der Bezugssysteme über den beidseitig gefassten Brief. Dieser in den Messdaten deutlich sichtbare Impuls macht die Auswertung der Messung der Messdaten anfällig für Fehler und führt dazu, dass sich die Waage nach Ausfuhr des Briefes nicht schnell genug beruhigt, wobei die Beruhigung für die nachfolgende Messung notwendig ist. Die Erfindung trägt somit zu einer Minimierung des Kraftschlusses zwischen der Waage und den angrenzenden Komponenten bei.

Dabei wird die Wiegung vorteilhafterweise mit einer Waage vorgenommen, die auf der Basis einer Kraft-Weg Kompensation funktioniert. Bei einer solchen Waage bewegt sich die Auflage der Waage trotz der mit Schwerkraft einwirkenden Postsendung höchstens im Mikrometerbereich um den Nullpunkt herum, so dass sie als nahezu starr bezeichnet werden kann. Ein in die Waage einfahrender oder ein aus der Waage ausfahrender Brief verändert seine horizontale Lage somit nicht. Bei diesen Waagen, die mit ihrer Wiegefläche keine "Stufe" zu der vorherigen und nachfolgenden Transportstrecke ausbilden, lassen sich die erfindungsgemäßen Beruhigungszonen, die vorteilhafterweise als in die Transportstrecke flexibel einsetzbare Beruhigungsmodule ausgebildet sind, besonders gut einsetzen.

Ein weiterer Vorteil der Beruhigungszone respektive des Beruhigungsmoduls ist, dass es mit einem eigenen unabhängigen Antrieb ausgestattet je nach Bedarf vor oder hinter der Waage als Puffer oder als Beschleunigungsstrecke genutzt werden kann. Wenn beispielsweise die Geschwindigkeit auf der Waage etwas verzögert werden musste, um die Wiegung zu komplettieren, so kann die Bandgeschwindigkeit in der Beruhigungszone entsprechend erhöht werden, um den ursprünglichen Abstand der Postsendungen wieder herzustellen. Der Vorteil der nicht gefassten Führung in der Beruhigungszone liegt in diesen Fällen auch darin, dass der von der Waage kommende Brief sich einfach auf ein etwas schneller laufendes Band setzt und nicht von einem mit höherer Geschwindigkeit laufenden Deckbandsystem aus der Waage gezerrt wird. Dasselbe gilt auch für den "weichen" Übergang von der Beruhigungszone hin zur Waage. Die Waage kann sich den Brief gewissermaßen aus der von der Beruhigungszone holen. Generell ist die Beruhigungszone wegen der nicht gefassten Führung der Briefe tolerant gegenüber unterschiedlichen Geschwindigkeiten.

Dabei ist es besonders vorteilhaft, wenn die Beruhigungszone zum Transport der Postsendung einen Unterflurantrieb aufweist, auf den sich die transportierte Postsendung absetzen kann. Die seitliche Führung bei diesem Unterflurantrieb kann durch seitliche Leitbleche geschehen, an die sich ein flacher auf der Kante transportierte Brief anlegen und daran entlang rutschen kann. Da das Rutschen mit bremsender und den Brief angreifender Reibung einhergeht, ist es vorteilhaft, wenn die seitlichen Leitbleche durch mindestens einen seitlichen Führungsriemen ersetzt wird, der mit der Geschwindigkeit des Unterflurantriebs angetrieben wird und an den sich eine flache auf dem Unterflurantrieb mit einer Kante aufstehende Postsendung anlegen kann. Dabei kann das Kippen des Briefes zur Seite des Führungsriemens durch eine Neigung des Unterflurantriebs provoziert werden. Besonders vorteilhaft ist es, an beiden Seiten des Unterflurantriebes Führungsriemen vorzusehen, so dass der Brief zu beiden Seiten kippen kann.

Um eine möglichst lange Wiegdauer zu erhalten, ist es vorteilhaft, die Kopplung zur Beruhigungszone über den darauftreffenden Brief zu verzögern. Das ist möglich, wenn im Falle der hinter der Waage angeordneten Beruhigungszone deren Niveau ein wenig, insbesondere weniger als 1 Millimeter, unterhalb des Niveaus der Wiegestrecke liegt. In diesem Fall hängt die die Wiegestrecke verlassende Postsendung zeitweilig mit ihrem Anfang in der Luft, bis sie auf die Beruhigungszone kippt. Auf diese Weise wird die Messdauer etwas länger und die Kopplung beim Übergang noch weicher, was sich positiv auf das Wiegeergebnis auswirkt. In Praxis wird es so sein, dass in Stromrichtung vor und hinter der Beruhigungszone ein Deckbandsystem mit zwei die Briefe permanent fassenden Führungsriemen anschließt, so dass die relative Position der Postsendungen innerhalb des Stromes zuverlässig erhalten bleibt.

Um einen möglichst hohen Durchsatz von Postsendungen von über 20.000 Stück pro Stunde zu erhalten, ist es vorteilhaft, zwei parallele Wiegeeinrichtungen mit jeweils separaten Zufuhrstrecken, jeweils einer mit Waage ausgestatteten Wiegestrecke und jeweils einer Abfuhrstrecke vorzusehen. In Strömungsrichtung vor den Wiegeeinrichtungen ist dann eine Verteileinrichtung in die Transportstrecke einzubringen, mit denen die Postsendungen auf die eine oder die andere Zufuhrstrecke gelenkt wird, so dass die Postsendungen auf die Wiegeeinrichtungen aufgeteilt werden. Bei zwei parallelen Wiegeinrichtungen kann die Verteileinrichtung die Postsendungen abwechselnd auf die beiden jeden Wiegeinrichtungen verteilen. Hinter den Wiegeinrichtungen ist eine entsprechende Vereinigungsvorrichtung vorzusehen, mit der die über die einzelnen Wiegeinrichtungen geführten Teilströme wieder zusammengeführt werden. Beim Zusammenführen ist vorteilhafterweise darauf zu achten, dass der ursprüngliche Abstand der einzelnen Postsendungen im Strom erhalten bleibt. Gerade dafür ist die Einrichtung der Beruhigungszonen vorteilhaft, mit deren individuell ansteuerbaren Antrieben eventuelle Verschiebungen ausgeglichen werden können.

In einer anderen vorteilhaften Ausführungsform werden nicht zwei Wiegeinrichtungen parallel geschaltet, sondern eine Waage wird mit einem Bypass ausgestattet der die Wiegeeinrichtungen umgeht, wobei im Bypass keine Wiegung der Postsendung stattfindet. Mit mehreren hintereinander in der Transportstrecke angeordneter und mit Bypass ausgestatteter Waagen ist eine Erhöhung der Flexibilität der gesamten Vorrichtung bei kleinerer Baubreite möglich. Auch bei dieser Ausführungsform wirkt sich der puffernde Charakter der erfindungsgemäßen Beruhigungsstrecken besonders vorteilhaft aus. Auch eine Kombination dieser beiden Ausführungsformen ist möglich.

Bei allen Ausführungsformen ist es im Hinblick auf die Flexibilität besonders vorteilhaft, wenn die Beruhigungszonen als Beruhigungsmodule ausgebildet, die jeweils einen Unterflurantrieb mit flankierenden Seitenbändern haben, wobei Unterflurantrieb und Seitenbändern mit derselben Geschwindigkeit betrieben werden und wobei der Abstand der Seitenbänder größer als die größte zu erwartende Stärke der Postsendung, insbesondere des Briefes, ist, so dass es nicht zu einer permanent gefassten Führung des Briefes kommt. Beim der Konzeption solcher Module ist auf die mechanische Kompatibilität der Komponenten zu achten.

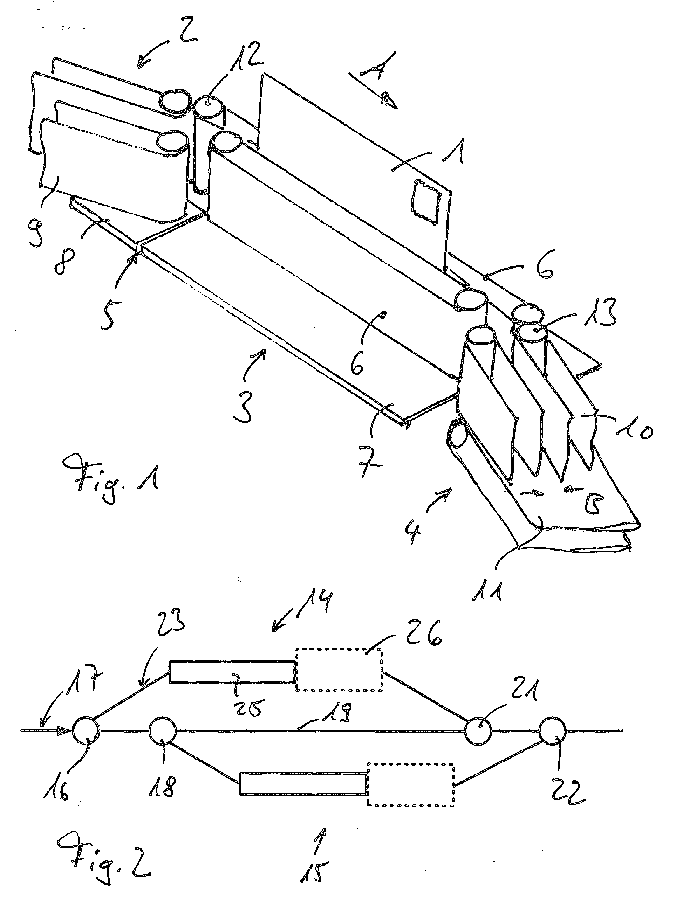

Nachfolgend wird die Erfindung anhand der Figuren 1 und 2 näher erläutert. Es zeigen:
- **Figur 1:**: eine Waage mit vor- und nachgeschalteter Beruhigungszone und
- **Figur 2:**: ein Schema parallel angeordneter Wiegestrecken.

Figur 1 zeigt eine Vorrichtung zum Wiegen von Briefsendungen 1, die auf einer Transportstrecke in einem in Pfeilrichtung A verlaufenden Sendungsstrom transportiert werden. In die Transportstrecke ist eine Wiegeeinrichtung eingebracht, die eine Zufuhrstrecke 2, als Waage ausgebildete Wiegestrecke 3 und eine Abfuhrstrecke 4 eingebracht ist. Wie an den Schlitzen 5 zu erkennen ist, ist die Wiegestrecke 3 von der Zufuhrstrecke 2 und der Abfuhrstrecke 4 mechanisch entkoppelt. Die Transportstrecke weist vor der Zufuhrstrecke 2 und hinter der Abfuhrstrecke 4 angetriebene Führungsriemen in der Art eines Deckbandsystems auf, zwischen denen die Briefe permanent gefasst transportiert werden. Zu einem solchen Deckbandsystem zusammengefasste Führungsriemen 6 sind in der Figur lediglich auf der Wiegestrecke 3 gezeigt, wobei diese über Antriebswalzen 12 angetrieben werden. Die zur Wiegestrecke 3 gehörige Waage weist eine Kraft-Weg Kompensation auf, so dass die Waagenauflage 7 in einer Ebene mit der Auflage 8 der Zufuhrstrecke 2 verbleibt.

Erfindungsgemäß ist vor der Wiegestrecke 3 in der Zufuhrstrecke 2 und hinter der Wiegestrecke 3 in der Abfuhrstrecke 4 je eine Beruhigungszone vorgesehen, in der der Brief ohne seitliche Klemmung geführt wird. So ist zu erkennen, dass der Abstand B zwischen den Führungsriemen 9 und 10 einen deutlich größeren Abstand hat als zwischen den Führungsriemen 6. Die Führungsriemen 9 und 10 werden ebenfalls über Antriebswalzen 13 angetriebe. Zum Transport des Briefes 1 die weist die Beruhigungszone einen Unterflurantrieb 11 auf, auf den sich der Brief absetzt, nachdem er die Wiegestrecke 3 verlassen hat. Mit der Kante auf dem Unterflurantrieb 11 aufstehend, kippt der Brief 1 gegen den linken oder den rechten der Führungsriemen 10, die mit derselben Geschwindigkeit wie der Unterflurantrieb 11 laufen.

In Figur 2 ist ein Schema parallel angeordneter Wiegestrecken 14 und 15 gezeigt. Die Wiegeeinrichtungen 14 und 15 zweigen an den als Weichen ausgebildeten Verteileinrichtungen 16 und 18 aus der Transportstrecke 17 ab. An beiden Wiegeeinrichtungen führt ein Bypass 19 vorbei, wobei Vereinigungseinrichtungen 21 und 22 die Teilströme wieder zusammenführen.

Die Wiegeeinrichtungen 14 und 15 haben eine Zufuhrstrecke 23, eine mit einer Waage 24 ausgestatteten Wiegestrecke und eine Abfuhrstrecke 26, wobei die Wiegestrecke von der Zufuhrstrecke 23 und der Abfuhrstrecke 26 mechanisch entkoppelt ist. Unmittelbar hinter jeder mit einer Waage 25 ausgestatteten Wiegestrecke ist eine erfindungsgemäße Beruhigungszone 26 vorgesehen.

## Patentansprüche

1. Vorrichtung zum Wiegen von Postsendungen, insbesondere von Briefsendungen, die auf einer Transportstrecke in einem Sendungsstrom transportiert werden, wobei in der Transportstrecke eine Wiegeeinrichtung mit einer Zufuhrstrecke, einer mit einer Waage ausgestatteten Wiegestrecke und eine Abfuhrstrecke vorgesehen ist, wobei die Wiegestrecke von der Zufuhrstrecke und der Abfuhrstrecke mechanisch entkoppelt ist, wobei angetriebene Führungsriemen vorgesehen sind, zwischen denen die Postsendungen geklemmt transportiert werden, wobei die Wiegestrecke separate im Bezugssystem der Waage befindliche Führungsriemen aufweist,
**dadurch gekennzeichnet,**
**dass** unmittelbar vor und/oder hinter der Wiegestrecke eine Beruhigungszone in der Abfuhrstrecke vorgesehen ist, in der die Postsendung ohne seitliche Klemmung geführt wird.

2. Vorrichtung nach Anspruch 1,
**dadurch gekennzeichnet,**
**dass** beim Wiegen jeweils eine Postsendung die mit einem Transportmittel ausgestattete Waage mit ihrer Schwerkraft beaufschlagt, wobei die Waage eine Kraft-Weg Kompensation aufweist.

3. Vorrichtung nach Anspruch 1 oder 2,
**dadurch gekennzeichnet, dass** die Beruhigungszone zum Transport der Postsendung einen Unterflurantrieb aufweist, auf den sich die Postsendung absetzt.

4. Vorrichtung nach Anspruch 3,
**dadurch gekennzeichnet,**
**dass** die Beruhigungszone einen seitlichen Führungsriemen aufweist, an den sich eine flache auf dem Unterflurantrieb mit einer Kante aufstehende Postsendung anlegt, wobei der Führungsriemen mit der Geschwindigkeit des Unterflurantriebs angetrieben wird.

5. Vorrichtung nach einem der vorherigen Ansprüche,
**dadurch gekennzeichnet,**
**dass** im Falle der hinter der Waage angeordneten Beruhigungszone deren Niveau etwas unterhalb des Niveaus der Wiegestrecke liegt, so dass eine die Wiegestrecke verlassende Postsendung zeitweilig teilweise in der Luft hängt.

6. Vorrichtung nach einem der vorherigen Ansprüche,
**dadurch gekennzeichnet,**
**dass** in Stromrichtung hinter der Beruhigungszone wieder ein Deckbandsystem mit zwei klemmenden Führungsriemen vorgesehen ist.

7. Vorrichtung nach einem der vorherigen Ansprüche 1 bis 6,
**dadurch gekennzeichnet,**
**dass** zwei parallele Wiegeeinrichtungen mit jeweils separaten Zufuhrstrecke, einer mit Waage ausgestatteten Wiegestrecke und einer Abfuhrstrecke vorgesehen sind, wobei eine in der Transportstrecke vorgesehene Verteileinrichtung die Postsendungen auf die Wiegeeinrichtungen aufteilt.

8. Vorrichtung nach einem der vorherigen Ansprüche 1 bis 6,
**dadurch gekennzeichnet,**
**dass** ein als Bypass ausgebildeter Transportpfad vorgesehen ist, der die Wiegeeinrichtungen umgeht, wobei im Bypass (6,10,17) keine Wiegung stattfindet.

9. Vorrichtung nach Anspruch 8,
**dadurch gekennzeichnet,**
**dass** in der Transportstrecke zwei mit Bypass ausgestattete Vorrichtungen hintereinander angeordnet sind.

10. Beruhigungsmodul zum Einsatz in einer Vorrichtung nach einem der vorherigen Ansprüche,
**gekennzeichnet durch,**
einen Unterflurantrieb mit flankierenden Seitenbändern, wobei Unterflurantrieb und Seitenbändern dieselbe Geschwindigkeit aufweisen und wobei der Abstand der Seitenbänder größer als die größte zu erwartende Stärke der Postsendung, insbesondere des Briefes, ist.
